# DEMANDE DE BREVET EUROPEEN

(11) **EP 3 839 285 A1**
(43) Date de publication de la demande: **23.06.2021**
(21) Numéro de dépôt: 20213072.0
(22) Date de dépôt: 10.12.2020
(51) Int. Cl.: F16D 25/10, F16D 25/08, F16D 13/70, F16D 21/06

(54) **DISPOSITIF DE TRANSMISSION DE COUPLE À PLUSIEURS EMBRAYAGES MULTIDISQUES ACTIONNÉS PAR FLUIDE**

(30) Priorité: 19.12.2019 FR 1914827
(71) Demandeur: VALEO EMBRAYAGES, 80009 Amiens (FR)
(72) Inventeur: BOULET, Jérôme, 95892 CERGY PONTOISE (FR); LEBAS, Gilles, 98892 CERGY PONTOISE (FR); COLIN, Sébastien, 95892 CERGY PONTOISE (FR); CAUMARTIN, Laurent, 80009 AMIENS (FR)
(74) Mandataire: Saadi, Florian

(57) **Abrégé**

L'invention concerne un dispositif de transmission de couple (1) comportant un premier et deuxième embrayage (20, 30) comprenant chacun :
- un porte-disque d'entrée (6, 7),
- un porte-disque de sortie (8, 9),
- un ensemble multidisque (21, 31),
- un organe d'actionnement (50, 60),
ledit dispositif (1) comportant en outre un premier et un deuxième organe de transmission de force (25, 35),
dans lequel le premier organe de transmission de force (25) comprend au moins deux portions axiales (25a) faisant saillies axialement du premier organe de transmission en direction du deuxième organe de transmission (35), lesdites portions axiales traversant des ouvertures (35a) du deuxième organe de transmission (35) de manière à être radialement en contact contre le deuxième organe de transmission et à centrer radialement le deuxième organe de transmission (35) par rapport au premier (25).

## Description

La présente invention se rapporte au domaine des transmissions pour véhicules automobiles.

L'invention concerne plus particulièrement un dispositif de transmission de couple destiné à être disposé dans une chaîne de transmission de véhicule automobile entre un moteur thermique et une boîte de vitesses.

L'invention se rapporte également à un module hybride comprenant ledit dispositif de transmission de couple dans lequel une machine électrique tournante est disposée dans la chaine de traction.

Le document US2015083546 divulgue un dispositif de transmission de couple, en particulier un double embrayage pour une transmission à double embrayage comprenant un arbre menant, un premier embrayage à friction, un deuxième embrayage à friction, un premier arbre mené, et un deuxième arbre mené. Chacun des embrayages du double embrayage est un embrayage multidisque dit humide, ce qui signifie que les disques de l'embrayage baignent dans de l'huile.

Chaque embrayage multidisque comporte un porte-disque d'entrée solidaire en rotation d'un élément d'entrée, par exemple le vilebrequin du moteur, un porte-disque de sortie solidaire en rotation d'un élément de sortie, par exemple pour le premier embrayage le premier arbre mené et pour le deuxième embrayage le deuxième arbre mené, et un ensemble multidisque comprenant une pluralité de disques de friction solidaire en rotation autour de l'axe X de l'un des porte-disque d'entrée et de sortie, et une pluralité de plateaux respectivement disposés de part et d'autre de chaque disque de friction, solidaires en rotation autour de l'axe X de l'autre des porte-disque d'entrée et de sortie. Des garnitures de friction sont disposées entre les plateaux. Les disques de friction et les plateaux sont mobiles axialement de sorte qu'ils puissent se rapprocher les uns des autres.

Chaque embrayage comporte également un organe d'actionnement et un organe de transmission de force. L'organe de transmission de force est mobile axialement pour transmettre un effort d'embrayage généré par l'organe d'actionnement vers l'ensemble multidisque depuis une position débrayée vers une position embrayée. En effet, une extrémité de l'organe de transmission de force appuie tout autour de l'axe X sur un plateau de l'ensemble multidisque de manière à ce que les plateaux pressent les disques de friction pour transmettre le couple.

Afin que l'organe de transmission de force applique sur l'ensemble multidisque l'effort d'embrayage de manière uniforme autour de l'axe X, l'organe de transmission de force est centré par rapport à l'ensemble multidisque et par rapport au porte-disque sur lequel les plateaux sont solidaires.

Toutefois, dans les documents de l'art antérieur, le centrage de l'organe de transmission de force nécessite une conception particulière de l'embrayage. En effet par exemple, dans le document cité ci-dessus, le porte disque extérieure de chacun des embrayages multi-disques est centré au moyen d'une portion de support qui s'étend radialement vers l'intérieur et qui est disposé du côté de l'embrayage par lequel l'organe de transmission de force vient appliquer l'effort d'embrayage. Dans un tel cas, l'organe de transmission de force présente une pluralité de doigts d'orientation axiale, régulièrement répartis autour de l'axe X et passant chacun au travers de la portion de support à la faveur d'une ouverture dédiée équipée d'un insert. Les doigts d'orientation axiale présentent une surface externe qui coopère avec un rebord externe d'un insert rapporté dans l'une des ouvertures de manière à centrer axialement l'organe de transmission de force.

Or, un tel centrage est complexe puisqu'il nécessite l'utilisation d'inserts et requiert à ce que tous les organes de transmission d'effort soient pré-positionné angulairement par rapport au porte-disque extérieure lors de l'assemblage afin de permettre l'insertion des doigts dans les inserts.

Toutefois, un tel centrage nécessite que la portion de support du porte-disque extérieur soit disposée du côté de l'embrayage par lequel l'organe de transmission d'effort applique l'effort embrayage. Or, dans certaines circonstances, notamment afin de répondre à des contraintes de compacité du double embrayage, la portion de support du porte disque extérieur et l'organe de transmission d'effort sont disposés axialement de part et d'autre de l'embrayage, ce qui n'autorise pas un tel centrage.

Une idée à la base de l'invention est de simplifier et améliorer le centrage des organes de transmission de force par rapport à l'ensemble multidisque et par rapport à l'un des porte-disque d'entrée et porte-disque de sortie dans un embrayage multidisque.

Une autre idée à la base de l'invention est de faciliter la fabrication de l'embrayage multidisque, notamment au niveau de l'étape de centrage de l'organe de transmission de force.

L'invention y parvient, selon l'un de ses aspects, grâce à dispositif de transmission de couple destiné à être disposé dans une chaîne de transmission de véhicule automobile, présentant un axe X de rotation et comportant un premier et deuxième embrayage, chacun des premiers et deuxièmes embrayages comprenant :
- un porte-disque d'entrée,
- un porte-disque de sortie destiné à être couplé en rotation à un arbre d'entrée de la boite de vitesses,
- un ensemble multidisque comprenant au moins un disque de friction solidaire en rotation de l'un des porte-disques d'entrée et de sortie) et au moins deux plateaux respectivement disposés de part et d'autre de l'au moins un disque de friction, les deux plateaux étant solidaires en rotation de l'autre des porte-disques d'entrée et de sortie,
- un organe d'actionnement configuré pour délivrer un effort d'embrayage,
ledit dispositif comportant en outre un premier et un deuxième organe de transmission de force mobile en translation selon l'axe X qui coopère d'une part avec l'organe d'actionnement et d'autre part avec l'un des plateaux de manière à transmettre l'effort d'embrayage de l'organe d'actionnement vers l'ensemble multidisque,

dans lequel le premier organe de transmission de force comprend au moins deux portions axiales faisant saillies axialement du premier organe de transmission en direction du deuxième organe de transmission, lesdites portions axiales traversant des ouvertures du deuxième organe de transmission de manière à être radialement en contact contre le deuxième organe de transmission et à centrer radialement le deuxième organe de transmission par rapport au premier.

Grâce à ces caractéristiques, le deuxième organe de transmission de force est centré simplement à l'aide des portions axiales du premier organe de transmission qui s'insèrent dans les ouvertures du deuxième organe de transmission En effet, les portions axiales du premier organe de transmission de force permettent au deuxième organe de transmission de force d'être placé précisément dans la direction radiale de manière à ce que le deuxième organe de transmission de force transmette l'effort d'embrayage uniformément et continument au cours du temps à l'embrayage multidisque sans risquer de se décentrer.

Ainsi, le centrage des organes de transmission de force permet d'assurer un équilibrage du dispositif de transmission de couple, une homogénéité des efforts exercés entre les organes d'actionnement et les organes de transmission de force, une stabilité du rayon d'application et un parallélisme des efforts exercés par les organes de transmission de force sur les ensembles multidisques.

En outre, un tel centrage ne requiert pas que l'organe de transmission de force et la portion de support du porte-disque extérieur soit disposé du même côté de l'embrayage.

Dans la suite de la description et les revendications, on utilisera à titre non limitatif et afin d'en faciliter la compréhension, les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; et « intérieur /interne » ou « extérieur / externe » par rapport à l'axe X et suivant une orientation radiale, orthogonale à ladite orientation axiale, « l'intérieur » désignant une partie proximale de l'axe longitudinal X et « l'extérieur » désignant une partie distale de l'axe longitudinal X. Au sens de l'invention, la succession radiale se comprend en termes de distance radiale.

Dans le cadre de la présente invention, par « traverser » on entend désigner les portions axiales du premier organe de transmission qui s'insèrent dans les ouvertures du deuxième organe de transmission de manière débouchante ou non.

Selon d'autres modes de réalisations avantageux, un tel dispositif peut présenter une ou plusieurs des caractéristiques suivantes prises en combinaison.

Le premier organe de transmission de force est situé radialement à l'extérieur du deuxième organe de transmission de force. En variante, le premier organe de transmission de force est situé radialement à l'intérieur du deuxième organe de transmission de force.

Selon un mode de réalisation, le premier organe de transmission de force comprend au moins deux portions axiales, de préférence exactement quatre.

Selon un mode de réalisation, les portions axiales sont réparties régulièrement tout autour de l'axe X sur le premier organe de transmission de force et les ouvertures sont réparties régulièrement tout autour de l'axe X sur le deuxième organe de transmission de force. Ainsi, le centrage du deuxième organe de transmission de force se fait uniformément autour de l'axe X grâce à la répartition régulière des portions axiales du premier organe de transmission de force.

Selon un mode de réalisation, le premier organe de transmission de force comprend quatre portions axiales espacées chacune d'un angle d'environ 45° autour de l'axe X.

Selon un mode de réalisation, les portions axiales du premier organe de transmission de force sont situées à une extrémité interne dudit organe.

Selon un mode de réalisation, le premier organe de transmission de force est de forme annulaire et présente une extrémité radiale extérieure recourbée apte à venir en contact axialement avec un plateau de l'ensemble multidisque pour transmettre l'effort d'embrayage et une portion de liaison d'orientation radiale reliant ladite extrémité radiale extérieure recourbée auxdites portions axiales, ladite portion de liaison étant en contact avec un élément de l'organe d'actionnement.

Selon un mode de réalisation, le deuxième organe de transmission de force est de forme annulaire et présente une extrémité radiale extérieure recourbée, une surface d'appui intérieure en contact avec un élément de l'organe d'actionnement et une portion de liaison radiale reliant l'extrémité radiale extérieure recourbée à la surface d'appui intérieure.

Selon un mode de réalisation, le premier et le deuxième embrayage sont empilés radialement, c'est-à-dire qu'il existe un plan perpendiculaire à l'axe de rotation X du dispositif qui coupe à la fois le premier et le deuxième embrayage. Le premier embrayage se trouve radialement à l'extérieur c'est-à-dire le plus loin de l'axe de rotation X du dispositif et le deuxième embrayage radialement à l'intérieur, c'est-à-dire le plus proche de l'axe de rotation du dispositif. Ceci permet de limiter l'encombrement axial du dispositif de transmission de couple. Dans le cadre de l'invention, on utilisera indifférent les termes premiers et deuxième embrayage ou premier et deuxième embrayage de sortie.

Selon un mode de réalisation, les porte-disques d'entrée du premier et deuxième embrayage sont disposés radialement à l'extérieur du porte-disque de sortie de leur embrayage respectif.

Selon un mode de réalisation, le premier et deuxième organe de transmission de force sont disposés à l'arrière des ensembles multidisques.

Selon un mode de réalisation, l'organe d'actionnement est une butée hydraulique comprenant un piston annulaire et une butée tournante, portée par le piston et coopérant avec la surface d'appui de l'organe de transmission de force. Cet organe d'actionnement est aussi appelé actionneur de type « CSC» (« Concentric Slave Cylinder » en anglais).

Le piston annulaire est monté coulissant axialement à l'extérieur d'un tube interne, le piston et le tube formant une chambre d'actionnement. La chambre d'actionnement peut être étanche et remplie d'huile. Le piston et le tube sont fixes en rotation de sorte que la chambre d'actionnement et l'huile ne tourne pas.

Selon un aspect de l'invention, la butée tournante peut être un palier, notamment un palier à roulement. Le palier à roulement peut comporter une bague intérieure fixée au piston, une bague extérieure en appui contre l'organe de transmission de force et des corps roulants interposés entre la bague intérieure et la bague extérieure. De préférence, les corps roulants peuvent être des billes ou des aiguilles.

Selon un mode de réalisation, les porte-disques de sortie sont fixés à un élément de sortie, tel qu'un moyeu de sortie ou formés d'un seul tenant avec lui, ledit moyeu de sortie comportant des cannelures coopérant avec des cannelures complémentaires ménagées à l'extrémité de l'un ou l'autre des arbres d'entrée de la boite de vitesses.

Selon un mode de réalisation, le dispositif comprend en outre :
- un élément d'entrée de couple en rotation autour d'un axe X, apte à être couplé en rotation à un vilebrequin d'un moteur thermique,
- un élément intermédiaire disposé au sens de la transmission de couple entre l'élément d'entrée et le porte-disque de sortie, ce dernier étant relié sélectivement à l'élément d'entrée par un embrayage de séparation.

L'invention a également pour objet un module hybride comprenant le dispositif de transmission de couple selon la présente invention et comprenant en outre une machine électrique comprenant un rotor.

Selon un mode de réalisation, l'élément intermédiaire définit un support de rotor.

Avantageusement, l'élément intermédiaire définit en outre un porte-disque de sortie de l'embrayage de séparation et le porte-disque d'entrée du premier embrayage de sortie. Ainsi, l'élément intermédiaire définit à la fois le support de rotor, le porte-disque de sortie de l'embrayage de séparation et le porte-disque d'entrée du premier embrayage de sortie. Ceci permet donc de limiter le nombre de pièces et facilite le montage.

De préférence, l'embrayage de séparation, le premier et deuxième embrayage de sortie sont situés radialement à l'intérieur du rotor. Ainsi pour chaque embrayage, il existe un plan perpendiculaire à l'axe de rotation X du dispositif qui coupe à la fois le rotor et un des embrayages précités. Le dispositif permet ainsi intégrer concentriquement les trois embrayages au rotor de la machine électrique. Le dispositif étant alors très compact.

Avantageusement, le dispositif de transmission de couple selon la présente invention est connecté à un machine électrique 48V ou haute tension.

Selon un mode de réalisation, l'embrayage de séparation est situé radialement à l'intérieur du rotor. Au sens de la présente invention cela indique qu'il existe un plan perpendiculaire à l'axe de rotation du dispositif qui coupe à la fois l'embrayage de séparation et le rotor.

Enfin, l'invention a également pour objet un véhicule automobile comprenant un module hybride selon la présente invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.
[fig.1] représente une vue partielle en coupe axiale d'un dispositif de transmission de couple selon l'invention.
[fig.2] représente une vue en perspective d'un premier organe de transmission de force selon l'invention.
[fig.3] représente une vue en perspective d'un deuxième organe de transmission de force selon l'invention.

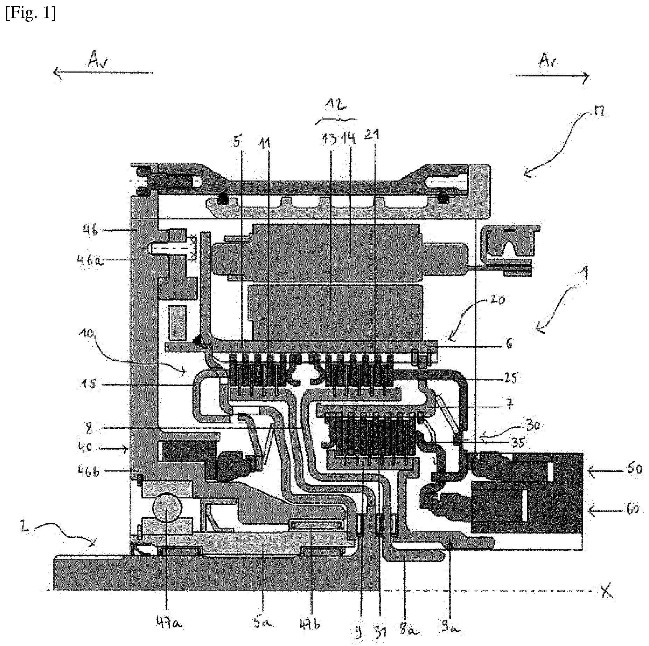

En relation avec la figure 1, on observe un dispositif de transmission de couple 1 comprenant :
- un élément d'entrée de couple 2, en rotation autour d'un axe de rotation X, apte à être couplé en rotation à un vilebrequin d'un moteur thermique (non représenté),
- un premier élément de sortie de couple 8a tel qu'un moyeu, apte à être couplé en rotation à un premier arbre d'entrée d'une boîte de vitesses (non représentée),
- un deuxième élément de sortie de couple 9a tel qu'un moyeu apte à être couplé en rotation à un deuxième arbre d'entrée d'une boîte de vitesses (non représentée).

Dans l'exemple considéré, le deuxième élément de sortie 9a est disposé en parallèle du premier élément de sortie 8a au sens de la transmission de couple. Chacun de ces éléments tourne autour d'un axe de rotation X du dispositif.

Un dispositif d'amortisseur de torsion (non représenté) peut être positionné entre le vilebrequin du moteur thermique et l'élément d'entrée de couple 2.

Dans l'exemple considéré, on observe également un module hybride M comprenant le dispositif de transmission de couple 1 ainsi qu'une machine électrique tournante 12 comprenant un rotor 13 et un stator 14. Le stator 14 est fixe et disposé autour du rotor 13. Le rotor 13 est disposé au sens de la transmission de couple entre l'élément d'entrée de couple 2 d'une part et le premier et deuxième élément de sortie 8a, 9a d'autre part.

Dans l'exemple considéré, la machine électrique tournante 12 est une machine synchrone à aimants permanents.

Le rotor 13 de la machine électrique tournante est relié sélectivement à l'élément d'entrée 2 par un embrayage de séparation 10, au premier élément de sortie 8a par un premier embrayage 20, et au deuxième élément de sortie 9a par un deuxième embrayage 30. Le premier et deuxième embrayage 20, 30 sont également appelés premier et deuxième embrayage de sortie 20, 30.

Le dispositif 1 comprend également un élément intermédiaire 5 définissant un support de rotor. Dans l'exemple considéré, l'élément intermédiaire 5 est agencé entre l'élément d'entrée de couple 2 et les premier 8 et deuxième 9 élément de sortie de couple, au sens de la transmission de couple. Dans l'exemple considéré, le rotor 13 est disposé directement sur l'élément intermédiaire 5 sans pièce supplémentaire. En variante, une pièce supplémentaire solidaire de l'élément intermédiaire 5 est prévue comme support de rotor.

Ainsi, l'élément intermédiaire 5 maintient la machine électrique tournante 12 en rotation. La machine électrique tournante 12 est alors appelée « in-line », c'est-à-dire que l'axe de rotation de la machine électrique tournante 12 est confondu avec l'axe de rotation X du dispositif 1 de transmission de couple.

Dans l'exemple considéré, l'embrayage de séparation 10 est situé radialement à l'intérieur du rotor 13. Ainsi, il existe un plan perpendiculaire à l'axe X qui passe à la fois par l'embrayage de séparation 10 et le rotor 13.

L'embrayage de séparation 10 accouple sélectivement et par friction l'élément d'entrée de couple 2 et l'élément intermédiaire 5 et comprend :
- un porte-disque d'entrée solidaire en rotation de l'élément d'entrée de couple 2,
- un porte-disque de sortie défini par l'élément intermédiaire 5 et
- un ensemble multidisque 11 comprenant plusieurs disques de friction, ici quatre, solidaires en rotation du porte-disque d'entrée, plusieurs plateaux respectivement disposés de part et d'autre de chaque disque de friction, solidaires en rotation du porte-disque de sortie et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée et le porte-disque de sortie.

Chaque porte-disque synchronise en rotation l'ensemble des plateaux et l'ensemble des disques de friction. Chaque portes-disque comporte une jupe cylindrique sur lesquelles sont montées les plateaux et les disques de friction.

Les disques de friction de l'ensemble multidisque de l'embrayage de séparation coopèrent avec la jupe cylindrique du porte-disque d'entrée selon leur périphérie radialement intérieure par cannelures. Les disques de friction sont donc radialement à l'extérieur de la jupe cylindrique.

Les plateaux de l'ensemble multidisque 11 de l'embrayage de séparation 10 coopèrent avec la jupe cylindrique du porte-disque de sortie selon leur périphérie radialement extérieure par cannelures. Les plateaux sont donc radialement à l'intérieur de la jupe cylindrique.

Dans l'exemple considéré, le dispositif comprend également un premier embrayage de sortie 20 accouplant sélectivement et par friction l'élément intermédiaire 5 et le premier élément de sortie 8a.

Ainsi, le premier embrayage de sortie 20 comprend :
- un porte-disque d'entrée 6 défini par l'élément intermédiaire 5,
- un porte-disque de sortie 8 solidaire en rotation du premier élément de sortie 8a et,
- un ensemble multidisque 21 comprenant plusieurs disques de friction, ici cinq, solidaires en rotation du porte-disque de sortie, plusieurs plateaux respectivement disposés de part et d'autre de chaque disque de friction, solidaires en rotation du porte-disque d'entrée et des garnitures de friction disposées entre les plateaux et un disque de friction, fixées de chaque côté des disques de friction, l'embrayage 20 décrivant une position débrayée et une position embrayée dans laquelle lesdits plateaux et le disque de friction pincent les garnitures de friction de manière à transmettre un couple entre le porte-disque d'entrée 6 et le porte-disque de sortie 8.

Dans l'exemple considéré, le dispositif 1 comprend un deuxième embrayage de sortie 30 analogue au premier embrayage de sortie 20, accouplant sélectivement et par friction l'élément intermédiaire 5 et le deuxième élément de sortie 9a.

Le deuxième embrayage de sortie 30 comprend :
- un porte-disque d'entrée 7 solidaire en rotation de l'élément intermédiaire 5,
- un porte-disque de sortie 9 solidaire en rotation du deuxième élément de sortie 9a et,
- un ensemble multidisque 31 comprenant plusieurs disques de friction, ici six.

De manière commune aux trois embrayages 10, 20 et 30, les garnitures peuvent être fixées sur les disques de friction, notamment par collage, notamment par rivetage, notamment par surmoulage. En variante, les garnitures sont fixées sur les plateaux.

Chaque porte-disque peut synchroniser en rotation l'ensemble des plateaux ou l'ensemble des disques de friction.

Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

Dans l'exemple considéré, les embrayages sont de type humide et comportent entre deux et sept disques de friction, de préférence quatre disques de friction. De tels embrayages multi-disques permettent de limiter la hauteur radiale de limiter l'étendue axiale. En variante, ils peuvent être de type secs.

Les embrayages de sortie 20, 30 peuvent être agencés pour ne pas être simultanément dans la même configuration embrayée. En revanche, ils peuvent simultanément être configurés dans leur position débrayée.

Dans l'exemple considéré, le premier embrayage de sortie 20 et le deuxième embrayage de sortie 30 se succèdent radialement en rapprochement de l'axe X. Le premier et deuxième embrayage de sortie 20, 30 sont situés radialement à l'intérieur du rotor 13, c'est-à-dire qu'il existe un plan perpendiculaire à l'axe de rotation X qui coupe les embrayages de sortie 20 et 30 et le rotor.

Ici, le premier embrayage 20 est disposé radialement à l'extérieur du deuxième embrayage 30.

Dans l'exemple considéré, le dispositif 1 comprend en outre un carter de protection 46. Le carter de protection 46 est constitué d'une paroi radiale 46a et d'une portion axiale 46b comprenant un épaulement. La portion axiale 46b définit une extrémité radiale, en particulier l'extrémité radiale interne du carter de protection 46.

Dans l'exemple considéré, le dispositif 1 comprend un organe d'actionnement 40 et un organe de transmission de force 15 associé à l'embrayage de séparation 10. Un organe de maintien en position débrayée, tel qu'une rondelle belle ville utilisé dans l'exemple considéré peut être prévu pour repousser l'organe de transmission de force 15 de l'embrayage de séparation 10. L'embrayage de séparation 10 est de type « normalement ouvert ».

L'organe de transmission de force 15 est mobile axialement pour transmettre l'effort d'actionnement de l'organe d'actionnement 40 vers l'embrayage de séparation 10. L'organe de transmission de force exerce un effort axial sur l'ensemble multidisque correspondant pour déplacer les plateaux vers les disques. L'actionnement est ainsi de type « poussé ».

L'organe de transmission de force 15 présente une extrémité radiale extérieure recourbée définissant une surface d'appui pour exercer l'effort axial sur l'ensemble multidisque 11, continue ou discontinue dans l'exemple considéré.

L'organe de transmission de force 15 de l'embrayage de séparation 10 présente trois coudes entre lesquelles sont interposées des portions planes. Cela permet d'avoir un actionnement compact axialement.

Lors de l'assemblage le piston 15 et le support rotor 5 doivent être solidaires axialement tout en permettant le mouvement axial du piston 15 lors de sa commande. Comme cela est représenté dans l'exemple considéré, cela est réalisé grâce à la découpe rentrante du piston 15 dans le support 5. La découpe du piston 15 est d'un diamètre supérieur au support 5 ce qui permet à la portion du piston de diamètre supérieur d'empêcher les deux pièces de se désolidariser.

L'organe d'actionnement 40 comprend un piston annulaire monté coulissant axialement à l'extérieur d'un tube interne, le piston et le tube formant une chambre d'actionnement. L'organe d'actionnement 40 comporte une butée tournante, qui est ici un palier à roulement, portée par le piston et coopérant avec une extrémité radiale intérieure de l'organe de transmission de force. Les pressions fluidiques associées aux positions « embrayée » et « débrayée » sont les pressions de la chambre d'actionnement.

Le palier à roulement comporte une bague extérieure fixée au piston, une bague intérieure en appui contre l'organe de transmission de force et des corps roulants interposés entre la bague intérieure et la bague extérieure. Le piston est de révolution autour de l'axe de rotation X.

Dans l'exemple considéré, le tube de l'organe d'actionnement 40 de l'embrayage de séparation est ménagé dans le carter de protection 46 qui définit un réseau d'alimentation en fluide de l'organe d'actionnement 40 ainsi que le circuit de refroidissement de l'embrayage 10.

Dans l'exemple considéré, les embrayages 10, 20, 30 sont disposés dans une chambre étanche contenant de l'huile, le carter de protection 46 définit en partie cette chambre étanche.

Dans l'exemple considéré, le dispositif 1 comprend deux organes de roulement support de l'élément intermédiaire 5, à savoir ici un roulement à billes 47a et un roulement douille à aiguilles 47b. Les organes de roulement 47a, 47b sont disposés radialement entre l'élément intermédiaire 5 et le carter de protection 46. Plus particulièrement, les organes de roulement 47 sont disposés entre une extrémité radiale du carter de protection 46, telle que la portion axiale 46b et une portion axiale 5a de l'élément intermédiaire 5.

L'organe de roulement à billes 47a peut être à gorge profonde ou à 4 points de contact afin de reprendre plus efficacement les efforts axiaux. Cet organe de roulement permet d'obtenir un guidage amélioré du moteur électrique par le carter de protection et d'éviter au maximum son basculement.

L'organe de roulement 47a est une liaison rotule et assure une liaison pivot indispensable au bon guidage de la machine électrique tournante. En effet, l'étude cinématique d'un organe de roulement (de manière générale un roulement à une rangée de billes) conduit à modéliser ce composant par une liaison rotule. Les actions mécaniques transmissibles par les contacts entre les billes et les bagues sont essentiellement radiales ou obliques et concourantes.

Ces deux roulements permettent en particulier d'absorber les efforts de basculement. De par sa conception, le roulement douilles à aiguilles 47b sera plus à même de reprendre les efforts radiaux dus à la masse et aux vibrations du rotor 13, les aiguilles ayant plus de surface en contact que les billes. On placera de préférence le roulement douilles à aiguilles 47b au plus près du centre de gravité du rotor pour reprendre un maximum d'effort radial. Le roulement à billes 47a absorbera lui une partie secondaire de l'effort radial et tous les efforts axiaux.

Dans l'exemple considéré, l'organe de roulement 47a comporte une bague intérieure et une bague extérieure. Avantageusement, la bague intérieure est au contact de l'élément intermédiaire 5, de préférence avec une portion axiale 5a de l'élément intermédiaire 5 et la bague extérieure est au contact avec le carter de protection, de préférence avec la portion axiale 46b du carter de protection 46.

Dans l'exemple considéré, l'organe de roulement à billes 47a est bloqué sur son extrémité axiale avant par deux circlips et sur son extrémité axiale arrière par un épaulement de la portion axiale 46b du carter 46 et un épaulement de l'élément intermédiaire 5.

Le rotor 13 via l'élément intermédiaire 5 est alors bloqué dans les deux directions axiales, ce qui permet la reprise de tous les efforts axiaux issu de l'élément intermédiaire 5. Ces efforts peuvent être des efforts actionnement de l'embrayage de séparation 10 dirigés vers la boîte de vitesses, des efforts actionnement du premier ou deuxième embrayage de sortie 20, 30 dirigés vers le moteur thermique ou des efforts de boîte lorsque les arbres de boîtes transmettent du couple (efforts positifs ou négatifs).

Avantageusement, l'embrayage de séparation 10, l'organe d'actionnement 40 associé à l'embrayage de séparation 10 et au moins un organe de roulement 47 se succèdent radialement en rapprochement de l'axe X.

Dans l'exemple considéré, le dispositif 1 comprend également un organe d'actionnement 50, en particulier un organe d'actionnement à butée tournante associé au premier embrayage de sortie 20.

Le dispositif 1 comprend également un organe d'actionnement 60, en particulier un organe d'actionnement à butée tournante associé au deuxième embrayage de sortie 30.

Ces organes d'actionnement 50, 60 reprennent les mêmes éléments que ceux détaillés en lien avec l'organe d'actionnement 40 de l'embrayage de séparation 10.

Dans l'exemple considéré, les organes d'actionnement 50 et 60 sont logés dans une même enveloppe et ne forment qu'un seul et même composant appelé classiquement système hydraulique de commande ou double actionneur concentrique. Les formes des pistons et/ou des organes d'actionnement 40, 50, 60 sont choisis de sorte qu'ils puissent s'empiler radialement ce qui contribue à la compacité axiale du dispositif 1.

Le dispositif 1 comporte en outre un premier et un deuxième organe de transmission de force 25, 35 mobile en translation selon l'axe X qui coopère d'une part avec l'organe d'actionnement 50, 60 et d'autre part avec l'un des plateaux de manière à transmettre l'effort d'embrayage de l'organe d'actionnement vers l'ensemble multidisque 21, 31 correspondant.

Dans l'exemple considéré, l'organe de transmission de force 25 est mobile axialement pour transmettre l'effort d'actionnement de l'organe d'actionnement 50 vers le premier embrayage de sortie 20.

L'organe de transmission de force 35 est mobile axialement pour transmettre l'effort d'actionnement de l'organe d'actionnement 60 vers le deuxième embrayage de sortie 30.

Les organes de transmission de force des embrayages 10, 20, 30 présentent chacun une extrémité radiale extérieure recourbée définissant une surface d'appui pour exercer l'effort axial sur les ensembles multidisques. L'actionnement est ainsi de type « poussé ».

Un organe de maintien en position débrayée, tel qu'une rondelle belleville peut être prévu pour repousser les organes de transmission de force des embrayages de sortie 20, 30. Les embrayages de sortie 20, 30 sont de type « normalement ouvert ».

De manière à appuyer uniformément sur les plateaux de l'ensemble multidisque 11, 21, 31 et à éviter que l'organe de transmission 15, 25, 35 se déloge de sa position, l'organe de transmission est centré par rapport à l'axe X et notamment par rapport au porte-disque qui est accouplé avec les plateaux. En effet, l'organe de transmission 15, 25, 35 exerçant un effort sur les plateaux, pour éviter tout risque d'usure ou de casse, l'organe de transmission 15, 25, 35 est en contact avec le porte-disque accouplé avec les plateaux.

Pour cela, l'organe de transmission 15 de l'embrayage de séparation 10 et l'organe de transmission 25 du premier embrayage de sortie 20 passe au travers d'un orifice ménagé dans l'élément intermédiaire 5 qui est associé au porte-disque de sortie de l'embrayage de séparation 10 au porte-disque d'entrée 6 du deuxième embrayage 20. Ainsi, les organes de transmission 15, 25 sont accouplés en rotation avec l'élément intermédiaire 5 et sont centrés par rapport aux porte-disques où sont accouplés les plateaux.

Cependant, dans le cas de l'organe de transmission 35, il n'est pas possible de réaliser un orifice ou une ouverture dans le porte-disque d'entrée 6, 7 ou dans la portion de support porteur du porte-disque d'entrée 6, 7 à savoir l'élément intermédiaire 5 puisque l'organe de transmission 35 est situé à l'arrière et à l'intérieur du dispositif de transmission de couple 1 et qu'il ne croise pas ces éléments.

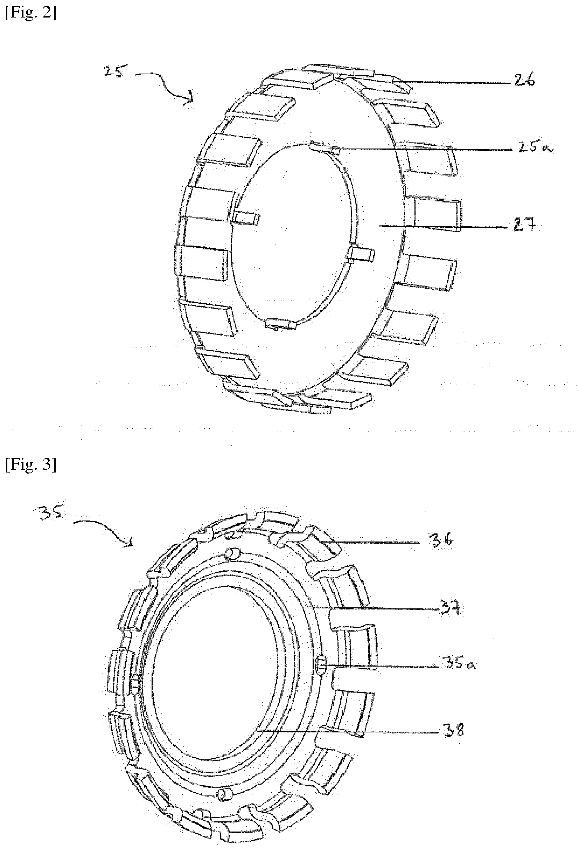

En relation avec les figures 1, 2 et 3, on peut apercevoir que pour centrer l'organe de transmission de force 35, le premier organe de transmission de force 25 comprend au moins deux portions axiales 25a, faisant saillies axialement du premier organe de transmission 25 en direction du deuxième organe de transmission 35. Ces portions axiales 25a traversent des ouvertures 35a du deuxième organe de transmission 35 de manière à être radialement en contact contre le deuxième organe de transmission 35 et à centrer radialement le deuxième organe de transmission 35 par rapport au premier 25.

Ainsi, les portions axiales 25a du premier organe de transmission de force 25 ont une forme complémentaire aux ouvertures 35a du deuxième organe de transmission de force 35 permettant de réaliser à la fois le centrage de l'organe de transmission de force 35 mais également l'entrainement en rotation de l'organe de transmission 35 avec le porte-disque d'entrée 7 à partir de l'organe de transmission 25.

Pour centrer de manière optimale l'organe de transmission 35 tout en limitant les coûts de fabrication, l'organe de transmission 25 comprend quatre portions axiales 25a régulièrement réparties tout autour de l'axe X. L'organe de transmission 35 comprenant un nombre d'ouvertures 35a au moins identique au nombre de portions axiales 25a. Les ouvertures 35a sont situés au regard des extension axiales 25a.

Comme cela est visible sur les figues 2 et 3, le premier organe de transmission de force 25 est de forme annulaire et présente une extrémité radiale extérieure recourbée 26 apte à venir en contact axialement avec un plateau de l'ensemble multidisque 20 pour transmettre l'effort d'embrayage. Dans l'exemple considéré, l'extrémité extérieure 26 comporte une pluralité de doigts. L'organe de transmission 25 présente également une portion de liaison d'orientation radiale 27 reliant ladite extrémité radiale extérieure recourbée 26 auxdites portions axiales 25a. La portion de liaison 27 est en contact avec un élément de l'organe d'actionnement 50.

Les portions axiales 25a sont réalisées par découpe de matière dans la portion de liaison 27 puis orientées axialement par pliage par exemple.

Le deuxième organe de transmission de force 35 est de forme annulaire et présente une extrémité radiale extérieure recourbée 36 et une surface d'appui intérieure 38 en contact avec un élément de l'organe d'actionnement 60. Une portion de liaison radiale 37 relie l'extrémité radiale extérieure 36 à la surface d'appui intérieure 38.

Les ouvertures 35a sont situées dans la portion de liaison radiale 37. Les ouvertures 35a sont réalisées par découpage et peuvent être rectangulaires ou comporter des rayons aux extrémités comme cela est le cas dans l'exemple considéré.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Dans les revendications, tout signe de référence entre parenthèses ne saurait être interprété comme une limitation de la revendication.

## Revendications

1. Dispositif de transmission de couple (1) destiné à être disposé dans une chaîne de transmission de véhicule automobile, présentant un axe X de rotation et comportant un premier et deuxième embrayage (20, 30), chacun des premier et deuxième embrayages (20, 30) comprenant :
- un porte-disque d'entrée (6, 7),
- un porte-disque de sortie (8, 9) destiné à être couplé en rotation à un arbre d'entrée de la boite de vitesses,
- un ensemble multidisque (21, 31) comprenant au moins un disque de friction solidaire en rotation de l'un des porte-disques d'entrée et de sortie (6, 7, 8, 9) et au moins deux plateaux respectivement disposés de part et d'autre de l'au moins un disque de friction, les deux plateaux étant solidaires en rotation de l'autre des porte-disques d'entrée et de sortie (6, 7, 8, 9),
- un organe d'actionnement (50, 60) configuré pour délivrer un effort d'embrayage,
ledit dispositif (1) comportant en outre un premier et un deuxième organe de transmission de force (25, 35) mobile en translation selon l'axe X qui coopère d'une part avec l'organe d'actionnement (50, 60) et d'autre part avec l'un des plateaux de manière à transmettre l'effort d'embrayage de l'organe d'actionnement vers l'ensemble multidisque (21, 31),
**caractérisé en ce que** le premier organe de transmission de force (25) comprend au moins deux portions axiales (25a) faisant saillies axialement du premier organe de transmission en direction du deuxième organe de transmission (35), lesdites portions axiales traversant des ouvertures (35a) du deuxième organe de transmission (35) de manière à être radialement en contact contre le deuxième organe de transmission et à centrer radialement le deuxième organe de transmission (35) par rapport au premier (25).

2. Dispositif (1) selon la revendication 1, **caractérisé en ce que** les portions axiales (25a) sont réparties régulièrement tout autour de l'axe X sur le premier organe de transmission de force (25) et les ouvertures (35a) sont réparties régulièrement tout autour de l'axe X sur le deuxième organe de transmission de force (35).

3. Dispositif (1) selon la revendication 1 ou la revendication 2, **caractérisé en ce que** les portions axiales (25a) du premier organe de transmission de force (25) sont situées à une extrémité interne dudit organe (25).

4. Dispositif (1) selon l'une quelconque des revendications précédentes, **caractérisé en ce que** le premier organe de transmission de force (25) est de forme annulaire et présente une extrémité radiale extérieure recourbée (26) apte à venir en contact axialement avec un plateau de l'ensemble multidisque (21) pour transmettre l'effort d'embrayage et une portion de liaison d'orientation radiale (27) reliant ladite extrémité radiale extérieure recourbée (26) auxdites portions axiales (25a), ladite portion de liaison (27) étant en contact avec un élément de l'organe d'actionnement (50).

5. Dispositif (1) selon l'une quelconque des revendications précédentes, **caractérisé en ce que** le deuxième organe de transmission de force (35) est de forme annulaire et présente une extrémité radiale extérieure recourbée (36), une surface d'appui intérieure (38) en contact avec un élément de l'organe d'actionnement (60) et une portion de liaison radiale (37) reliant l'extrémité radiale extérieure recourbée (36) à la surface d'appui intérieure (38).

6. Dispositif (1) selon l'une quelconque des revendications précédentes, **caractérisé en ce que** le premier et le deuxième embrayage (20, 30) sont empilés radialement.

7. Dispositif (1) selon l'une quelconque des revendications précédentes, **caractérisé en ce que** le premier et deuxième organe de transmission de force (25, 35) sont disposés à l'arrière des ensembles multidisques (21, 31).

8. Dispositif (1) selon l'une quelconque des revendications précédentes, **caractérisé en ce qu'**il comprend en outre :
- un élément d'entrée de couple (2) en rotation autour d'un axe (X), apte à être couplé en rotation à un vilebrequin d'un moteur thermique,
- un élément intermédiaire (5) disposé au sens de la transmission de couple entre l'élément d'entrée (2) et le porte-disque de sortie (8, 9), ce dernier étant relié sélectivement à l'élément d'entrée (2) par un embrayage de séparation (10)

9. Module hybride (M) comprenant un dispositif de transmission de couple (1) selon l'une quelconque des revendications précédentes, **caractérisé en ce qu'**il comprend en outre une machine électrique tournante (12) comprenant un rotor (13).

10. Module hybride (M) selon les revendication 8 et 9, **caractérisé en ce que** l'élément intermédiaire (5) définit un support de rotor.
